# EUROPEAN PATENT APPLICATION

(11) **EP 4 043 802 A1**
(43) Date of publication of application: **17.08.2022**
(21) Application number: 21156227.7
(22) Date of filing: 10.02.2021
(51) Int. Cl.: F24D 17/00, F24D 17/02, F28D 20/00

(54) **SYSTEM AND METHOD FOR PRODUCING DOMESTIC HOT WATER**

(71) Applicant: DAIKIN INDUSTRIES, LTD., Osaka 530-8323 (JP); Daikin Europe N.V., 8400 Oostende (BE)
(72) Inventor: Kirschner, Timo, 74363 Güglingen (DE)
(74) Representative: Hoffmann Eitle

(57) **Abstract**

The present disclosure relates to a system for producing domestic hot water, comprising a tank (10) having a top portion and a bottom portion, the tank (10) containing a heat storing fluid (12), a tapping unit (14) comprising a first tapping coil (20) and a second tapping coil (22), wherein the first tapping coil (20) is fluidly connected to a cold water port (16) and to a hot water port (18), and is immersed in the heat storing fluid (12) in the bottom portion of the tank (10), wherein the second tapping coil (22) is fluidly connected in series to the first tapping coil (20) by a connection pipe (32), and to the hot water port (18), and is immersed in the heat storing fluid (12) in the top portion of the tank (10), a switching device (40) configured to switch between a first state in which water flows from the cold water port (16) through only the first tapping coil (20) to the hot water port (18), and a second state in which water flows from the cold water port (16) through the first tapping coil (20) and, after having flown through the first tapping coil (20), through to the second tapping coil (22) to the hot water port (18). The present disclosure further relates to correspond method for producing domestic hot water.

## Description

### Technical field

The present disclosure relates to a system and a method for producing domestic hot water.

### Background

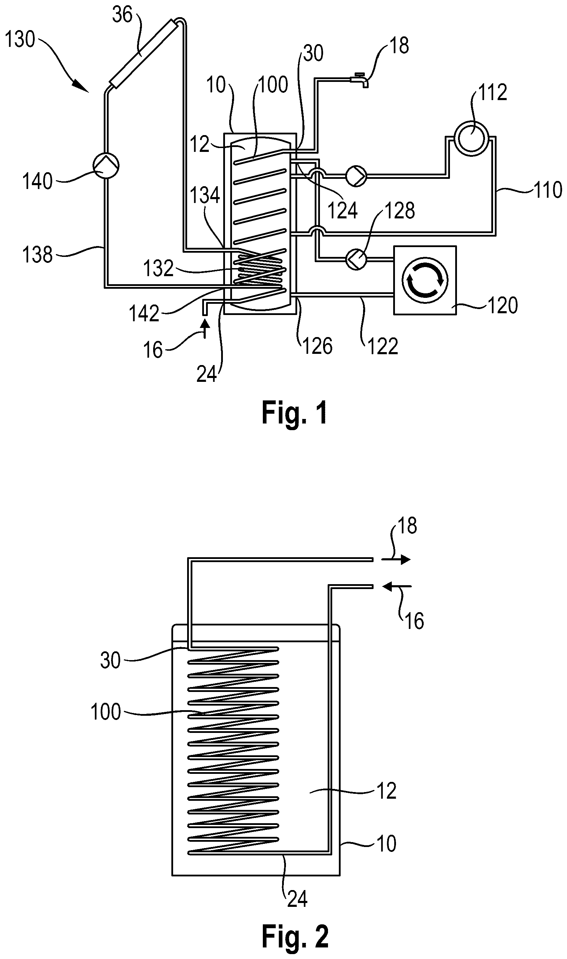

The present disclosure particularly relates to a system for producing domestic hot water embodying a tank 10 (storage tank) containing a heat storing fluid 12 as shown in figures 1 and 2. The heat storing fluid is, in an example, permanently stored in the tank and only exchanged for maintenance reasons.

A tapping coil 100 of a tapping unit 14 is fluidly connected to a cold water (freshwater) port 16 and to a hot water port 18. The tapping coil 100 is immersed in the heat storing fluid 12 of the tank 10.

During the tapping process and for producing hot water, cold freshwater is supplied via the cold water port 16 to a bottom portion of the tapping coil 100. The water flowing from the bottom portion through the tapping coil 100 towards the top portion is heated by the heat storing fluid 12 and withdrawn at the hot water port 18 to be supplied for example as tap water.

Additionally, a heating circuit 110 may be connected to the tank 10. The heating circuit 110 may as well be connected to the tank via a heating circuit coil (not shown) immersed in the heat storing fluid 12 in the tank 10 to heat a heat medium in the heat in circuit similar as described above.

The heated heating medium may for example be supplied to a floor heating 112 or a radiator.

During the tapping process, the heat storing fluid 12 is cooled by the cold water introduced via the cold water port 16 at the bottom portion of the tapping coil 100. The water flows winding by winding of the tapping coil 100 from the bottom portion of the tapping coil 100 to its top portion and is heated by heat transfer with the heat storage medium 12. As a consequence, the temperature distribution of the heat storing fluid within the tank 10 during the tapping process resembles a stratification with the highest temperature in the top portion of the tank and the lowest temperature in the bottom portion of the tank.

In order to reheat the heat storing fluid 12 in the tank 10, various heat generating possibilities exist including, but not limited, to a heat pump 120, such as an air heat pump or a groundwater heat pump, and/or a solar system 130. In either case, it is conceivable to connect the heat pump 120 via a heat pump coil (not shown) or the solar system 130 via a solar system coil 132 immersed in the heat storing fluid 12 to the tank 10 forming a heat generating circuit containing a heat generating medium. In this context, a hot heat generating medium is introduced via a supply port 124, 134 at a top portion of the heat pump coil or the solar system coil 132 and cold heat generating medium is extracted or discharged via a discharge port 126, 142 at a bottom portion of the heat pump coil or the solar system coil 132.

An example of such a system for producing domestic hot water is disclosed in EP 3 037 743 A1.

One important factor of those systems is tapping quantity, that is the quantity of hot water that may be produced at a predetermined set temperature, such as 44°C. In this context, it is aimed at using the energy of the heat storing fluid 12 in the tank 10 as much as possible.

At the same time, an important factor is the efficient operation of the heat generating systems, such as the heat pump 120 and the solar system 130. In this context, the lower the temperature of the extracted heat generating medium, the higher the temperature difference between the extracted heat generating medium and the temperature of the heat source (air, groundwater, son, etc.). The higher the temperature difference, the higher the efficiency.

### Summary of the Invention

In view of the aforesaid, it is an object of the present invention to provide a system and a method for producing hot water allowing to increase efficiency of the heat generating system and the tapping quantity without increasing the size of the system.

This object is solved by a system for producing domestic hot water as defined in claim 1 and a method for producing domestic hot water as defined in claim 10. Further embodiments of the system and the method are defined in the respective dependent claims.

According to a first aspect, a system for producing domestic hot water comprises a tank (storage tank) having a top portion and a bottom portion, the tank containing a heat storing fluid. The heat storing fluid may be water, PCM (Phase Change Material), CH (Central Heating) water, water glycol mixtures and other energy storing media. The system further comprises a tapping unit having a first tapping coil and a second tapping coil.

The first tapping coil is fluidly connected to a cold water port and to a hot water port. The first tapping coil is immersed in the heat storing fluid in the bottom portion of the tank.

The second tapping coil is fluidly connected in series to the first tapping coil by a connection pipe and to the hot water port. The second tapping coil is immersed in the heat storing fluid in the top portion of the tank. To put it differently, the second tapping coil is immersed in the heat storing fluid above the first tapping coil.

Further, the system comprises a switching device configured to switch between a first state in which water flows from the cold water port through only the first tapping coil to the hot water port, and a second state in which water flows from the cold water port through the first tapping coil and, after having flown through the first tapping coil, through to the second tapping coil to the hot water port.

The system according to the first aspect effectively uses the energy of the heat storage medium in the tank so that the quantity of hot water available for the tapping process may be increased. Additionally, the heat storage medium in a bottom portion of the tank may be cooled most effectively so that efficiency of the heat generating system such as a heat pump or a solar system may be increased. In this context, not only the temperature may at the lowest position of the tank be decreased to a maximum, but the temperature may also be decreased more quickly. In addition, the proposed solution is independent from the kind of the heat generating system so that it is applicable to a wide range of systems for producing domestic hot water.

According to a second aspect, the switching device may be further configured to switch to a third state in which water flows from the cold water port through the first tapping coil and is, after having flown through the first tapping coil, divided into two partial flows, wherein a first partial flow flows through the second tapping coil and a second partial flow bypasses the second tapping coil and is mixed with the first partial flow having flown through the second tapping coil, the mixed flow flowing to the hot water port.

According to the second aspect, the effective use of energy of the heat storing medium in the tank is even further increased, whereby the quantity of hot water available for the tapping process may be further increased. Also in this aspect, the amount of water flowing to the second tapping coil is reduced to a minimum and the temperature heat storage medium at the bottom of the tank can be kept low.

According to a third aspect, the switching device is configured to switch during a single tapping operation between the states based on a temperature of the water at the hot water port.

As a result, a relatively constant temperature of hot water may be delivered to the hot water port and the energy of the heat storage medium in the tank which may be used most effectively. To put it differently, rather than "overheating" the hot water and subsequently mixing it again with cold water to obtain the desired tapping water temperature, the predetermined set temperature may be delivered to the hot water port during the entire tapping process (single tapping operation).

According to a forth aspect, the switching device is configured to switch during the single tapping operation from the first state to the third state when the temperature of the water at the hot water port falls below a first predetermined set temperature. In one example, the first predetermined set temperature may be 42°C. Yet, other temperatures are conceivable as well depending on the needs.

According to this aspect, when the water is not sufficiently heated by the first tapping coil in the bottom portion of the tank, the system makes some use of the second tapping coil in the top portion of the tank. Subsequently, the water heated by the first and second tapping coil is mixed with water heated by the first tapping coil to reach the first predetermined set temperature of the water in the hot water port. Again, this enables efficient use of the energy of the heat storage medium in the tank with the associated advantages.

According to a fifth aspect, a switching device is configured to switch during the single tapping operation from the third state to the second state when the temperature of the water at the hot water port falls below a second predetermined set temperature. The first predetermined set temperature and the second predetermined set temperature may in one embodiment be the same.

When the temperature of the water at the hot water port in the third state falls below the second predetermined set temperature (first predetermined set temperature if both temperatures are the same), i.e. the water is not sufficiently heated, the switching device switches to the second state in which the water from the cold water port flows entirely through the first tapping coil and the second tapping coil without any portion of the cold water bypassing the second tapping coil. In this second state, the first and second tapping coil resemble a single coil. As a result, at this final stage the remaining energy of the heat storing fluid may be extracted to heat the water in the tapping coil to the desired temperature (first or second predetermined set temperature) making efficient use of the energy of the heat storing fluid.

According to a sixth aspect, the switching device is configured to switch at the start of the single tapping operation from the second state to the first state when the temperature of the water at the hot water port exceeds a predetermined threshold. The predetermined threshold may for example be 44°C.

Thus, at the start of the tapping process, it is first evaluated whether a certain threshold temperature of the hot water can be realized when the first and second tapping coil resemble a single coil. Only if this is the case, the switching device separates the two tapping coils so that only the first tapping coil is flown through by the to be heated water to effectively use the energy of the heat storage medium in the tank. Thus, it can reliably be prevented that no hot water at the desired temperature is available.

According to the seventh aspect, the first tapping coil has a first water inlet and a first water outlet and the second tapping coil has a second water inlet and a second water outlet, wherein the first water inlet is connected to the cold water port and the first water outlet is connected to the connection pipe, wherein the second water inlet is connected to the connection pipe and the second water outlet is connected to the switching device, wherein the switching device is further connected to a bypass pipe, fluidly connected to the connection pipe, and to the hot water port.

Thus, the three states mentioned above can easily be realized with a simple structure.

According to an eighth aspect, the connection between the bypass pipe and the connection pipe and/or switching device are/is disposed outside the tank.

As the mentioned connections are susceptible for potential leakage, a positioning of the connections outside the tank is beneficial for maintenance purposes.

According to a ninth aspect, the switching device is a mixing valve, preferably a thermostatic mixing valve. Those mixing valves, particularly thermostatic mixing valves, are known as scald protection.

The mixing valve may be electrically controlled. Yet, it is preferred that the mixing valve merely switches between the different states based on the respective temperature of the water. In this instance, the mixing valve does not require any power connection, which is beneficial as the tanks do very often not require power connection. Thus, no change of the configuration of the tank as such is required.

According to a tenth aspect, a method for producing domestic hot water comprises the steps of, in a first state, flowing water from a cold water port through only a first tapping coil, immersed in a heat storing fluid in a bottom portion of a tank, to a hot water port, and, in a second state, flowing water from the cold water port through the first tapping coil and, after having flown through the first tapping coil, through to a second tapping coil, immersed in the heat storing fluid in a top portion of the tank, to the hot water port.

The method according to the tenth aspect effectively uses the energy of the heat storage medium in the tank so that the quantity of hot water available for the tapping process may be increased. Additionally, the heat storage medium in a bottom portion of the tank may be cooled most effectively so that efficiency of the heat generating system such as a heat pump or a solar system may be increased. In addition, the proposed solution is independent from the kind of heat generating system so that it is applicable to a wide range of systems for producing domestic hot water.

According to an eleventh aspect, the method further comprises the step of, in a third state, flowing water from the cold water port through the first tapping coil, and dividing the flow of water, after having flown through the first tapping coil, into two partial flows. A first partial flow flows through the second tapping coil and a second partial flow bypasses the second tapping coil. The first partial flow having flown through the second tapping coil is mixed with the second partial flow and the mixed flow is flowing to the hot water port.

According to the eleventh aspect, the effective use of energy of the heat storing medium in the tank is even further increased, whereby the quantity of hot water available for the tapping process may be further increased. Also in this aspect, the amount of water flowing to the second tapping coil is reduced to a minimum and the temperature heat storage medium at the bottom of the tank can be kept low.

According to a twelfth aspect, the method further comprises the step of switching during a single tapping operation between the states based on a temperature of the water at the hot water port.

As a result, a relatively constant temperature of hot water may be delivered to the hot water port and the energy of the heat storage medium in the tank may be used most effectively. To put it differently, rather than "overheating" the hot water and subsequently mixing it again with cold water to obtain the desired tapping water temperature, the predetermined set temperature may be delivered to the hot water port during the entire tapping process (single tapping operation).

According to a thirteenth aspect, the method further comprises the step of switching, during the single tapping operation, from the first state to the third state when the temperature of the water at the hot water port falls below a first predetermined set temperature. In one example, the first predetermined set temperature may be 42°C. Yet, other temperatures are conceivable as well depending on the needs.

According to this aspect, when the water is not sufficiently heated by the first tapping coil in the bottom portion of the tank, the system makes some use of the second tapping coil in the top portion of the tank. Subsequently, the water heated by the first and second tapping coil is mixed with water heated by the first to reach the first predetermined set temperature of the water in the hot water port. Again, this enables efficient use of the energy of the heat storage medium in the tank with the associated advantages.

According to a fourteenth aspect, the method further comprises the step of switching, during the single tapping operation, from the third state to the second state when the temperature of the water at the hot water port falls below a second predetermined set temperature. The first predetermined set temperature and the second predetermined set temperature may in one embodiment be the same.

When the temperature of the water at the hot water port in the third state falls below the second predetermined set temperature (first predetermined set temperature if both temperatures are the same), i.e. the water is not sufficiently heated, the switching device switches to the second state in which the water from the cold water port flows entirely through the first tapping coil and the second tapping coil without any portion of the cold water bypassing the second tapping coil. In this second state, the first and second tapping coil resemble a single coil. As a result, at this final stage the remaining energy of the heat storing fluid may be extracted to heat the water in the tapping coil to the desired temperature (first or second predetermined set temperature) making efficient use of the energy of the heat storing fluid.

According to a fifteenth aspect, the method further comprises the step of switching, at the start of the single tapping operation, from the second state to the first state when the temperature of the water at the hot water port exceeds a predetermined threshold. The predetermined threshold may for example be 44°C. The predetermined threshold may also equal the first predetermined set temperature and/or at the second predetermined set temperature.

Thus, at the start of the tapping process, it is first evaluated whether a certain threshold temperature of the hot water can be realized when the first and second tapping coils resemble a single coil. Only if this is the case, the switching device separates the two tapping coils so that only the first tapping coil is flown through by the to be heated water to effectively use the energy of the heat storage medium in the tank. Thus, it can reliably be prevented that no hot water at the desired temperature is available.

Features of the method and further embodiments thereof can be used in the context of the device. The same applies to features of the device and its preferred further development which can be used in the context of the method.

It is obvious for a skilled person that the outdoor unit described above and in the claims is not limited to two, three or four heat exchangers and that features referring to an embodiment with two heat exchangers can be applied analogously to other embodiments with three, four or more heat exchangers.

### Brief Description of the Drawings

- Fig. 1: shows a known system for producing domestic hot water.
- Fig. 2: shows the tank of the system shown in figure 1.
- Fig. 3: shows a system for producing domestic hot water in accordance with the present invention.
- Fig. 4: shows the tank of the system shown in figure 3.

### Detailed Description

Preferred embodiments of a device according to the invention are described in the corresponding figures. Modifications of features can be combined to form further embodiments. The device and the corresponding methods described below are to be understood as exemplary and not limiting. Features of the embodiments described below can also be used to further characterize the device and the method defined in the claims.

It is obvious to a skilled person that individual features described in different embodiments can also be implemented in a single embodiment, given that they are not incompatible. Likewise, features described in the context of a single embodiment can also be provided in multiple respective embodiments individually or in any suitable sub-combination.

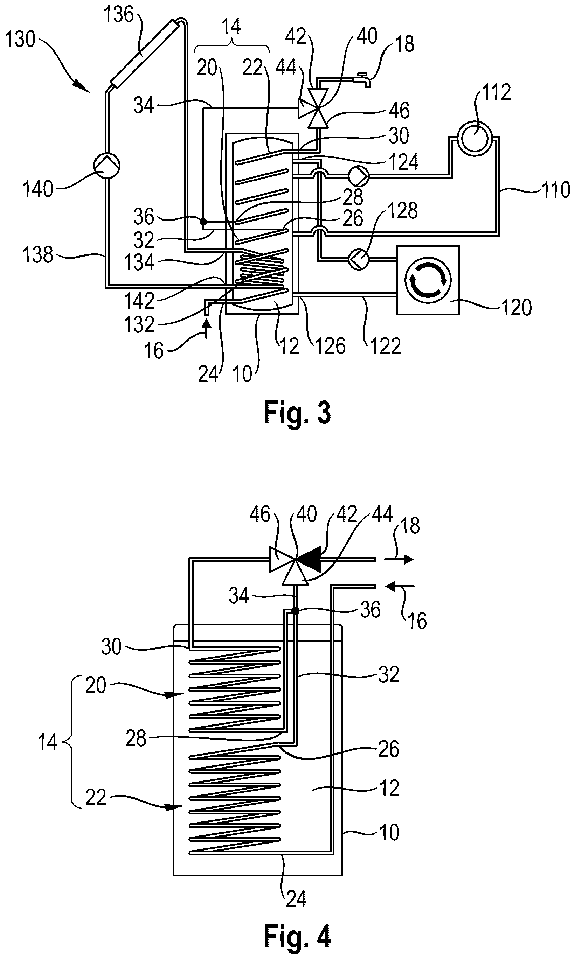

The system for producing domestic hot water shown in figure 3 comprises a tank 10 containing a heat storing fluid 12. In the embodiment, the heat storing fluid 12 may be water. Further, the tank 10 may be thermally insulated to conserve the heat stored in the heat storing fluid 12.

The system is also provided with a tapping unit 14 comprising a first tapping coil 20 and a second tapping coil 22. The first tapping coil 20 and the second tapping coil 22 are accommodated in the tank 10 and immersed in the heat storing fluid 12. The first tapping coil 20 is positioned in a bottom portion of the tank 10 below the second tapping coil 22 disposed in a top portion of the tank 10. The first tapping coil 20 and the second tapping coil 22 are fluidly connected in series by a connection pipe 32.

The first tapping coil 20 has a first water inlet 24 and a first water outlet 26. The first water inlet 24 is connected to the cold water port 16 and supplied with fresh cold water. The first water outlet 26 is connected to the connection pipe 32.

The second tapping coil 22 has a second water inlet 28 and a second water outlet 30. The second water inlet 28 is connected to the connection pipe 32 and the second water outlet 30 is connected to a switching device 40.

A bypass pipe 34 is fluidly connected to the connection pipe 32 and the switching device 40. In other words, the switching device 40 is connected to the hot water port 18, the second water outlet 30 and the bypass pipe 34. For this purpose, the switching device 40 has an outlet 42 connected to the hot water port 18, a first inlet 44 connected to the bypass line 34 and a second inlet 46 connected to the second water outlet 30.

In the present embodiment, the switching device 40 is a thermostatic mixing valve switching based on the temperature of water in the mixing valve. Those mixing valves are known as scald protectors.

In addition to the tapping unit, a heating circuit 110 may be connected to the tank. The heating circuit 110 may comprise floor heating 112 and/or radiators. A heating circuit coil (not shown) may be used to connect the heating circuit 110 to the tank and enable exchange of heat between the heat storing fluid 12 and a heat circuit medium circulating in the heating circuit 110. In another embodiment, the heat storing fluid 12 may circulate in the heating circuit 110 as the heating medium. In either case, heat is extracted from a top portion of the tank 10 and the heating medium is returned to a lower portion of the tank 10. Further details in this regard may also be taken from EP 3 0377 43 A1. It is to be understood that the heating circuit 110 may as well be omitted.

In addition, the embodiment schematically illustrates two possible heat generating systems. For example, a heat pump 120 such as an air or ground water heat pump may be embodied. The heat pump comprises a not shown refrigerant circuit (heat pump circuit) which in its simplest form comprises a heat source heat exchanger (not shown), such as an air or ground water heat exchanger, a compressor, an expansion mechanism (not shown) and a target heat exchanger (not shown). The target heat exchanger (not shown) may be a coil accommodated in the tank 10 and immersed in the heat storing fluid 12. Such coil is for example shown in EP 3 037 743 A1. Alternatively, the target heat exchanger (not shown) may exchange heat with a heat transfer medium, e.g. water, circulated in a heat transfer circuit 122 by a pump 128 as shown in the drawings. In this case, hot water is introduced via a supply port 124 in a top portion of the tank 10 and cold water is discharged via a discharge port 126 at a lower portion of the tank 10. The cold water flowing through the target heat exchanger (coil) exchanges heat with the refrigerant of in the heat pump circuit and is thereby heated and refed to the tank 10 as hot water.

Alternatively or in addition, a solar system 130 may be embodied. The solar system 130 comprises a solar circuit 138. The solar circuit 138 connects a collector 136, a solar coil 132 and a pump 140 for circulating a solar system heating fluid. The solar coil 132 is accommodated in the tank 10 and immersed in the heat storage fluid 12, preferably in a bottom portion of the tank 10. Also here, hot solar system heating fluid is introduced into the solar coil 132 via a supply port 134 at the top of the solar coil 132 and cold solar system heating fluid is extracted or discharged from the solar coil 132 via a discharge port 142 at the bottom of the solar coil 132.

Operation of the previously described system is explained in the following. In this context, only the tapping operation is explained because the heat generating process by a heat pump or a solar system is well known in the art.

During operation, the switching device 40 may assume three states.

In a first state, the second inlet port 46 of the switching device 40 is closed. In the first state water flows from the cold water port 16 via the first water inlet 24 into the first tapping coil 20. The water flows winding by winding through the first tapping coil 20 via the first water outlet 26 into the connection pipe 32 and the bypass pipe 34 into the first inlet 44 and out of the outlet port 42 into the hot water port 18. In the first state no water flows through the second tapping coil 22.

In a second state, the first inlet port 44 of the switching device 40 is closed. In the second state, water flows from the cold water port 16 via the first water inlet 24 into the first tapping coil 20. The water flows winding by winding through the first tapping coil 20 via the first water outlet 26 into the connection pipe 32 and via the second water inlet 28 into the second tapping coil 22. The water further flows winding by winding through the second tapping coil 22 and via the second water outlet 30 and the second inlet port 46 into the switching device 40 and out of the outlet port 42 to the hot water port 18. In the second state the entire flow of water flows through the first tapping coil 20 and the second tapping coil 22 which are fluidly connected in series.

In a third state, the first inlet port 44 and the second inlet port 46 of the switching device 40 are opened. In the third state, water flows from the cold water port 16 via the first water inlet 24 into the first tapping coil 20. The water flows winding by winding through the first tapping coil 20 and via the first water outlet 26 into the connection pipe 32. At a branch point 36 at which the bypass pipe 34 and the connection pipe 32 are connected, the flow of water is divided into two partial flows.

A first partial flow flows then via the connecting pipe 32 and the second water inlet 28 into the second tapping coil 22. This first partial flow flows winding by winding through the second tapping coil 22 and is discharged via the second water outlet 30 and introduced in the switching device 40 via the second inlet port 46.

A second partial flow flows then via the branch pipe 34 and the first inlet port 44 into the switching device 40.

In the switching device 40, the first and second partial flow are merged/mixed and the mixed flow is discharged from the outlet port 42 to the hot water port 18.

Upon tapping (single tapping process), that is when a user withdraws hot water, such as when taking a shower, the switching device 40 is in a second state mode (second state), in which the first tapping coil 20 and the second tapping coil 22 resembling a single coil, wherein the entire flow of water flows through both coils 20, 22 in series.

If the water discharged from the outlet port 42 during the further tapping process exceeds a predetermined threshold, e.g. 44°C, the switching device 40 is configured to switch to first state mode (first state). Thus, at this stage the entire flow of water flows exclusively through the first tapping coil 20.

If the water discharged from the outlet port 42 during the further tapping process subsequently falls below a first predetermined set temperature, e.g. 42°C, the switching device 40 is configured to switch to a third state mode (third state). Thus, at this stage a first partial flow of water flows through both coils 20, 22 connected in series and a second partial flow flows exclusively through the first tapping coil 20.

If the water discharged from the outlet port 42 during the further tapping process subsequently falls below a second predetermined set temperature, which may be the same as the first predetermined set temperature, e.g. 42°C, the switching device 40 is configured to switch to the second state mode (second state). At this stage, the first tapping coil 20 and the second tapping coil 22 again resemble a single coil, wherein the entire flow of water flows through both coils 20, 22 in series.

Due to this configuration, heat is during the first state first extracted from the heat storing fluid 12 in the bottom portion of the tank so that the temperature of the heat storing fluid 12 in the bottom portion is decreased more rapidly. If the energy of the heat storing fluid 12 in the bottom portion no longer suffices to heat the water to the predetermined set temperature (first predetermined set temperature), the water flow is divided into the two partial flows (third state), wherein one partial flow exclusively flows through the first tapping coil 20 and, thus, as in the first state exclusively cools the heat storing fluid 12 in the bottom portion of the tank 10 so that the temperature of the heat storing fluid 12 in the bottom portion may still be decreased relatively quickly. The other partial flow flows through both tapping coils 20, 21 connected in series.

Finally and in case the energy again no longer suffices to heat the water to the predetermined set temperature (second predetermined set temperature), the system returns to the second state in which the water exclusively flows through both tapping coils 20, 22 in series to prolong the possible tapping time at the desired tapping temperature.

Thus, the present invention makes efficient use of the energy stored in the heat storing fluid 12 without the need to increase the length of the tapping coil thereby maintaining a compact system. In addition, it is possible to more quickly reduce the temperature of the heat storing fluid 12 and a bottom portion of the tank 10 and to an even lower temperature. Thus, a heat generating system, such as a heat pump or a solar system, may be operated more efficiently.

### List of reference numerals

- 10: tank
- 12: heat storing fluid
- 14: tapping unit
- 16: cold water port
- 18: hot water port
- 20: first tapping coil
- 22: second tapping coil
- 24: first water inlet
- 26: second water outlet
- 28: second water inlet
- 30: second water outlet
- 32: connection pipe
- 34: bypass pipe
- 36: branch point
- 40: switching device
- 42: outlet port
- 44: first inlet port
- 46: second inlet port

- 100: tapping coil
- 110: heating circuit
- 112: floor heating
- 120: heat pump
- 122: heat transfer circuit
- 124: supply port
- 126: discharge port
- 128: pump
- 130: solar system
- 132: solar coil
- 134: supply port
- 136: collector
- 138: solar system heating medium circuit
- 140: pump
- 142: discharge port

## Claims

1. System for producing domestic hot water, comprising:
a tank (10) having a top portion and a bottom portion, the tank (10) containing a heat storing fluid (12);
a tapping unit (14) comprising a first tapping coil (20) and a second tapping coil (22),
wherein the first tapping coil (20) is fluidly connected to a cold water port (16) and to a hot water port (18), and is immersed in the heat storing fluid (12) in the bottom portion of the tank (10);
wherein the second tapping coil (22) is fluidly connected in series to the first tapping coil (20) by a connection pipe (32), and to the hot water port (18), and is immersed in the heat storing fluid (12) in the top portion of the tank (10);
a switching device (40) configured to switch between
a first state in which water flows from the cold water port (16) through only the first tapping coil (20) to the hot water port (18), and
a second state in which water flows from the cold water port (16) through the first tapping coil (20) and, after having flown through the first tapping coil (20), through to the second tapping coil (22) to the hot water port (18).

2. System according to claim 1, wherein the switching device (40) is further configured to switch to
a third state in which water flows from the cold water port (16) through the first tapping coil (20) and is after having flown through the first tapping coil (20) divided into two partial flows, wherein a first partial flow flows through the second tapping coil (22) and a second partial flow bypasses the second tapping coil (22) and is mixed with the first partial flow having flown through the second tapping coil (22), the mixed flow flowing to the hot water port (18).

3. System according to any one of the preceding claims, wherein the switching device (40) is configured to switch during a single tapping operation between the states based on a temperature of the water at the hot water port (18).

4. System according to claim 2 and 3, wherein the switching device (40) is configured to switch, during the single tapping operation, from the first state to the third state when the temperature of the water at the hot water port (18) falls below a first predetermined set temperature.

5. System according to claim 4, wherein the switching device (40) is configured to switch, during the single tapping operation, from the third state to the second state when the temperature of the water at the hot water port (18) falls below a second predetermined set temperature.

6. System according to claim 4 or 5, wherein the switching device (40) is configured to switch, at the start of the single tapping operation, from the second state to the first state when the temperature of the water at the hot water port (18) exceeds a predetermined threshold.

7. System according to any one of the preceding claims,
wherein the first tapping coil (20) has a first water inlet (24) and a first water outlet and the second tapping coil (22) has a second water inlet (28) and a second water outlet (26, 30),
wherein the first water inlet (24) is connected to the cold water port (16) and the first water outlet is connected to the connection pipe (32),
wherein the second water inlet (28) is connected to the connection pipe (32) and the second water outlet (26, 30) is connected to the switching device (40),
wherein the switching device (40) is further connected to a bypass pipe (34), fluidly connected to the connection pipe (32), and to the hot water port (18).

8. System according to claim 7, wherein the connection between the bypass pipe (34) and the connection pipe (32) and/or the switching device (40) are/is disposed outside the tank (10).

9. System according to any one of the preceding claims, wherein the switching device (40) is a mixing valve, preferably a thermostatic mixing valve.

10. Method for producing domestic hot water, the method comprising the steps of:
in a first state, flowing water from a cold water port (16) through only a first tapping coil (20), immersed in a heat storing fluid (12) in a bottom portion of a tank (10), to a hot water port (18),
in a second state, flowing water from the cold water port (16) through the first tapping coil (20) and, after having flown through the first tapping coil (20), through to a second tapping coil (22), immersed in the heat storing fluid (12) in a top portion of the tank (10), to the hot water port (18).

11. Method according to claim 10, further comprising the step of:
in a third state, flowing water from the cold water port (16) through the first tapping coil (20), and
dividing the flow of water, after having flown through the first tapping coil (20), into two partial flows, wherein a first partial flow flows through the second tapping coil (22) and a second partial flow bypasses the second tapping coil (22),
mixing the first partial flow having flown through the second tapping coil (22) with the second partial flow,
flowing the mixed flow flowing to the hot water port (18) .

12. Method according to claim 10 or 11, further comprising the step of switching during a single tapping operation between the states based on a temperature of the water at the hot water port (18).

13. Method according to claim 11 and 12, further comprising step of switching, during the single tapping operation, from the first state to the third state when the temperature of the water at the hot water port (18) falls below a first predetermined set temperature.

14. Method according to claim 13, further comprising the step of switching, during the single tapping operation, from the third state to the second state when the temperature of the water at the hot water port (18) falls below a second predetermined set temperature.

15. Method according to claim 13 or 14, further comprising the step of switching, at the start of the single tapping operation, from the second state to the first state when the temperature of the water at the hot water port (18) exceeds a predetermined threshold.
